# EUROPÄISCHE PATENTSCHRIFT

(11) **EP 0 643 253 B1**
(45) Veröffentlichungstag und Bekanntmachung des Hinweises auf die Patenterteilung: **05.11.1997**
(21) Anmeldenummer: 94113280.5
(22) Anmeldetag: 25.08.1994
(51) Int. Cl.: F16N 7/32, F16N 13/16, F04B 7/04, F04B 49/00, B05B 7/10

(54) **Mischschmiersystem für eine Öl-, bzw. Fliessfett-Luftschmierung**
Mist lubrication system for an oil or grease air lubrication
Système de graissage par pulvérisation pour un graissage à air au moyen d'huile ou de graisse

(30) Priorität: 09.09.1993 DE 4330572
(43) Veröffentlichungstag der Anmeldung: 15.03.1995
(73) Patentinhaber: DE LIMON FLUHME GMBH, D-40227 Düsseldorf (DE)
(72) Erfinder: Saretzky, Horst, D-58256 Ennepetal (DE); Herwig, Helmut, D-41516 Grevenbroich (DE)
(74) Vertreter: Stenger, Watzke & Ring Patentanwälte

(56) Entgegenhaltungen:
- DE-A- 2 320 635
- DE-A- 4 039 169
- DE-C- 44 294
- GB-A- 875 552
- US-A- 2 261 471
- US-A- 2 840 185
- US-A- 3 333 548
- US-A- 4 359 141

## Beschreibung

Die Erfindung betrifft ein Mischschmiersystem für eine Öl-, bzw. Fließfett-Luftschmierung, mit einer Schmierstoffpumpe, einer Druckluftzufuhr und einem Mischelement zum Mischen von Schmierstoff und Druckluft.

Ein bekanntes derartiges Mischschmiersystem der Anmelderin stellt eine Kombination eines Intervallschmiersystems (Einleiter, Progressiv, Zweileiter, Mehrleiter) mit einem Mischelement dar, in dem innerhalb des Schmiersystems eine geförderte Schmierstoffmenge in eine Leitung mit kontinuierlich strömender Druckluft eingespeist wird. Der Schmierstoff legt sich dabei an die Rohrinnenwand an und wird von der Druckluft in Strömungsrichtung weiter transportiert. Durch die Streckung des Schmierstoffs auf dem Transportweg in der Rohrleitung wird aus der impulsweisen Einspeisung eine fast kontinuierliche Schmierstoffabgabe in die Schmierstelle erreicht. Nachteilig ist bei der bekannten Mischschmierung, daß je Schmierstelle ein Mischelement zum Zuführen und Einstellen der Druckluft und ein zweites Mischelement zum Zuführen und Einstellen des Schmierstoffs erforderlich ist, wobei das im Mischelement vordosierte Öl über ein Ventil in die Mischkammer gelangt, wo es in dem Luftstrom verteilt wird. Das Schmierstoff-Luftgemisch wird einem gemeinsamen Auslaß entnommen und der Schmierstelle zugeführt. Eine Aufteilung in Gemisch-Teilströme ist nicht möglich. Dies bedeutet, daß entsprechend der Zahl der Schmierstellen eine entsprechend hohe Anzahl von Schmierstoffaufgliederungen vorgenommen werden muß und dann in einer entsprechend hohen Zahl von Mischsegmenten das Schmierstoff-Luftgemisch erzeugt werden muß, welches dann über den einzigen Auslaß der Schmierstelle zuführbar ist. Das Mischschmiersystem wird hierdurch apparativ aufwendig, teuer und weist für kleine Maschinen zu große Baugrößen auf.

Der Erfindung liegt die **Aufgabe** zugrunde, unter Meidung der beschriebenen Nachteile eine einfache und gleichmäßige Herstellung des Öl- bzw. Fließfett-Luftgemisches insbesondere auch für kleine Fördermengen und in hoher Taktfolge der Schmierstoffpumpe zu schaffen und vorzugsweise eine einfache Aufteilung des Gemisches unter Beibehaltung der Homogenität ohne bewegliche Teile zu ermöglichen.

Die Aufgabe ist erfindungsgemäß durch die Kombination folgender Merkmale an einem Mischschmiersystem gelöst:
a) Dosierpumpe für Schmierstoffe mit einem eine Arbeits- und Dosierkammer bildenden Zylinderraum im Pumpengehäuse, in den von der Auslaßseite her ein federbelasteter Steuerkolben und von der Einlaßseite her ein in gleicher Wirkrichtung federbelasteter Förderkolben hineinragen, welcher einen Schmierstoffansaugraum durchdringt, der koaxialer Anordnung an die Arbeits- und Dosierkammer angeschlossen ist und welcher mit einem Elektromagnetantrieb verbunden ist,
b) Mischelement mit einem Druckluft- und einem Schmierstoffanschluß an eine Mischkammer mit Auslaßkanal, wobei in dem Auslaßkanal ein drallerzeugender Einsatz, vorzugsweise das Drallstück eines Bohrers vorzugsweise zur Erzeugung von zwei Schmierstoff-Luftgemisch-Teilströmen angeordnet ist, denen jeweils ein Auslaß zugeordnet ist, und
c) eine an jeden Auslaß des Mischelementes angeschlossene Sprühdüse, deren Düsenbohrung einen drallerzeugenden Einsatz, vorzugsweise das Drallstück eines Bohrers, aufweist.

Mit der beschriebenen Magnetkolbenpumpe wird eine preiswerte Pumpe bereitgestellt, die mit geringem Montageaufwand an das erfindungsgemäße Mischelement angeschlossen werden kann, so daß kleine Schmierstoffmengen zwischen 10mm³ und 50mm³ in schneller Taktfolge homogen im Mischelement in der Druckluft verteilt werden können, wobei eine Aufteilung in zwei Schmierstoff-Luftgemisch-Teilströme unter Beibehaltung der Homogenität der Mischung ermöglicht ist und die Abgabe an zwei Schmierstellen über Düsen durchgeführt werden kann, die wiederum über den drallerzeugenden Einsatz zunächst eine Teilung des Schmierstoff-Luftgemisches vornimmt, deren zwei Teilströme sich zu einem gemeinsamen Sprühkegel vereinen, der ein im wesentlichen ovales Sprühbild mit extremer Randschärfe gewährleistet.

Vorzugsweise wird eine weitere Aufgliederung der Schmierstoff-Luftgemisch-Teilströme durch mindestens ein T-Stück vorgenommen, welches zwischen dem Mischelement und der Düse angeordnet ist, bei welchem im Gemischkanal ein drallerzeugender Einsatz, vorzugsweise das Drallstück eines Bohrers, angeordnet ist, an den zwei Auslaßbohrungen angeschlossen sind. Hiermit ist in einfacher Weise eine Vervielfältigung der Gemischabgaben für weitere Schmierstellen möglich, wobei auch weitere Untergliederungen in Abhängigkeit von den Rohrreibungswiderständen durchführbar sind.

Gemäß einer zweckmäßigen Ausgestaltung der Erfindung wird vorgeschlagen, den drallerzeugenden Einsatz mit einer Strömungslänge für das Gemisch mit einer vollen Umdrehung, d.h. einem Drall von mindestens 360° vorzusehen, bevor die Abführung in die beiden Auslässe vorgenommen ist. Hierdurch wird eine geringe Baugröße bei Gewährleistung der gewünschten Homogenität erreicht. Zweckmäßigerweise ist im Mischelement vor der Mischkammer, in der die Zumischung des Schmierstoffs zur Druckluft vorgenommen wird, in der Schmierstoffzuführungsleitung ein Rückschlagventil angeordnet, welches das Eindringen von Luft in die Schmierstoffleitung verhindert.

Zur Vereinfachung der Herstellung des Mischelementes ist in weiterer Ausgestaltung der Erfindung vorgeschlagen, die Schmierstoffzuleitung als kammerartige Bohrung fortzusetzen, in die über eine querverlaufende Verbindungsbohrung eine Druckluftzuführung durchführbar ist, wobei der Druckluftanschluß parallel zum Schmierstoffanschluß angeordnet ist und über beidseitige Querbohrungen im Bereich des drallerzeugenden Einsatzes zwei Auslässe für die beiden Gemisch-Teilströme gebildet sind. Hierdurch wird ein außerordentlich kleinbauendes Mischelement konstruktiv gestaltet, welches in segmentartiger Ausgestaltung die Anordnung mehrerer solcher Mischsegmente kompakt nebeneinander ermöglicht.

Eine bevorzugte Anwendung der erfindungsgemäßen Mischschmierung ist als Spurkranzschmieranlage für Schienenfahrzeuge vorgesehen, bei der die Spurkränze von Schienenfahrzeugen in Intervallen mit Schmierstoff-Luft-Gemisch besprüht werden, um bei Kurvenfahrt oder auch bei Pendelbewegungen die Reibung beim Anlaufen an das Schienenprofil zu verringern und den Verschleiß herabzusetzen. Dabei kann in der einfachsten Ausführungsform die erfindungsgemäße Magnetkolbenpumpe mit dem Mischelement und nur einer Dralldüse verwendet werden, was vor allem dort vorteilhaft ist, wo leichte Geräte gebraucht werden und eine Abschmierung bei hoher Zuggeschwindigkeit mit hoher Taktfolge in Kleinstmengen erforderlich ist. Mit den bisher bekannten Spurkranzschmieranlagen für Öl/Fließfett/Fett ist dies wegen zu langsamer Taktfolge nicht möglich.

Bei üblichen Eisenbahnzügen wird vorzugsweise eine Spurkranzschmieranlage gemäß der Erfindung verwendet, die mit einer Magnetkolbenpumpe, einem Mischelement, zwei T-Stücken und vier Düsen der erfindungsgemäßen Art ausgerüstet ist. Zur Anpassung an die bei Straßenbahnen vorgesehenen Rillenschienen mit Innenlaufkante und dem dadurch gegebenen Erfordernis der "Überkreuzschmierung" ist in zweckmäßiger Ausgestaltung der Erfindung vorgeschlagen, zwei parallel arbeitende Magnetkolbenpumpen mit daran angeschlossenen Mischelementen zu verwenden, von denen zwei Ausgänge zum jeweils anderen Spurkranz geführt sind.

Weitere Einzelheiten, Merkmale und Vorteile der Erfindung ergeben sich aus der nachfolgenden Beschreibung der zugehörigen Zeichnung, in der das erfindungsgemäße Mischschmiersystem in verschiedenen Ausgestaltungen schematisch dargestellt ist. In der Zeichnung zeigt:
- Fig. 1: ein einfaches Mischschmiersystem als Spurkranzschmieranlage,
- Fig. 2: ein erweitertes Mischschmiersystem als Spurkranzschmieranlage für Eisenbahnfahrzeuge,
- Fig. 3: ein modifiziertes Mischschmiersystem für Schienenfahrzeuge mit Rillenschienen, wie Straßenbahnen, und
- Fig. 4: eine schematische Schnittdarstellung der Arbeits- und Dosierkammer der in den Anlagen gemäß Figur 1 bis Figur 3 verwendeten Pumpe in drei Funktions-Positionen.

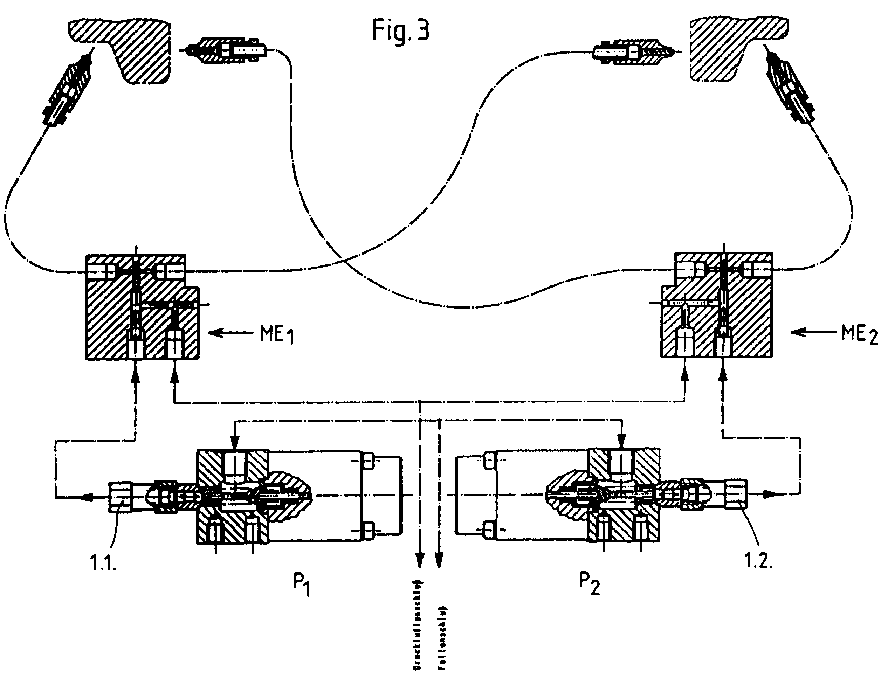

Die in der Zeichnung dargestellte Kolbendosierpumpe P, die in doppelter Ausführung mit den Bezugszeichen P₁ und P₂ in der Ausführung gemäß Figur 3 der Zeichnung Verwendung findet, besteht in ihrem Kernstück aus einem Pumpengehäuse 5 mit einem linksseitigen Gewinde-Anschlußflansch als Gehäuse für einen Steuerkolben 4 und einen Rohranschluß 1, der den Auslaß der Pumpe bildet, sowie einem rechtsseitigen Gewinde-Anschlußflansch für ein Volumengehäuse 9 mit darin angeordnetem Schmierstoff-Einlaß 16.

Im Pumpengehäuse 5 ist eine zylindrische Arbeits- und Dosierkammer 17 ausgebildet, deren Durchmesser zur Ausbildung von Steuerkanten links und rechts etwa im Bereich der Gewinde-Flanschanschlüsse stufenförmig erweitert ist. In die Arbeits- und Dosierkammer 17 des Pumpengehäuses 5 ragt von der Auslaßseite her ein durch eine Feder 2 belasteter Steuerkolben 4 hinein, durch dessen Bewegung im Zusammenwirken zwischen einem Steuerschlitz 18 und einer Steuerkante des Pumpengehäuses der Auslaß 1 geöffnet oder geschlossen wird. An der Steuerkante des Pumpengehäuses 5 kommt in der in der Zeichnung dargestellten Funktionsposition ein Sicherungsring 3 als Anschlag zur Anlage, der dazu dient, die Kraft der an ihm anliegenden Feder 2 in Schließrichtung auf den Steuerkolben 4 zu übertragen. Mittels eines Kupferdichtrings wird eine Abdichtung zwischen dem Pumpengehäuse 5 und dem Rohranschluß 1 bewirkt.

Von der anderen, in der Zeichnung rechten Seite, ragt in die Arbeits- und Dosierkammer 17 des Pumpengehäuses 5 ein Förderkolben 8 hinein, der stirnseitig ebenfalls mit einem Steuerschlitz 19 versehen ist. Der Förderkolben 8 durchdringt einen Schmierstoffansaugraum 20, in welchem der Einlaß 16 des Volumengehäuses 9 mündet. Der Förderkolben 8 ist durch eine Feder 7 mit gleicher Wirkrichtung wie die Feder 2 belastet, die einerseits am Pumpengehäuse und andererseits an einem Halteflansch 21 des Förderkolbens 8 zur Anlage kommt. Im Rahmen seiner Bewegung öffnet oder schließt der Förderkolben 8 über seinen Querschlitz 19 sowie die zugehörige Steuerkante des Pumpengehäuses 5 die Verbindung zwischen der Arbeits- und Dosierkammer 17 und dem Schmierstoff-Ansaugraum 20 bzw. dem Schierstoffeinlaß 16. Pumpengehäuse und Volumengehäuse sind über eine Ringdichtung 6 gegeneinander abgedichtet.

Der Förderkolben 8 ist über eine axiale Erstreckung 22 mit einem Verbindungsstift 23 fest verbunden, der ein Teil des Kerns eines Magnetantriebs 12 der Dosierpumpe ist. Der Magnetantrieb ist mit Schrauben 13, 14 und einer O-Ringdichtung 15 mit dem Volumengehäuse 9 verschraubt, wobei zur separaten Führung des Stiftes 23 eine Stützringeinrichtung 10 mit Dichtung 11 vorgesehen ist.

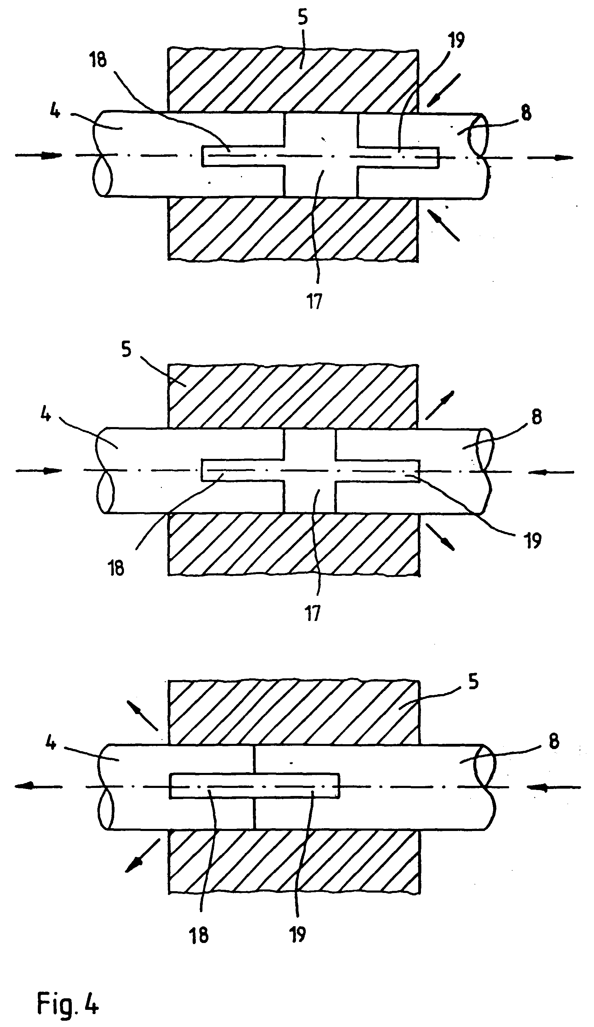

Die über den Magnetantrieb 12 iniziierten Kolbenbewegungen, die die Funktion der Dosierpumpe verdeutlichen, sind schematisch in Figur 4 der Zeichnung dargestellt, auf die in der nachfolgenden Beschreibung Bezug genommen wird.

Das in der Zeichnung oberste Bild der Figur 4 verdeutlicht den Vorgang des Füllens der Arbeitskammer 17 des Pumpengehäuses 5, in die von der einen Seite (links) der Steuerkolben 4 und von der anderen Seite (rechts) der Förderkolben 8 hineinragen. Über den Einlaß 16 des Volumengehäuses und den Schmierstoffansaugraum 20 wird Schmierstoff drucklos oder unter Druck eingegeben. Dieser gelangt aus dem Schmierstoffansaugraum, wie durch zwei Pfeile am Förderkolben 8 verdeutlicht ist, über den Steuerschlitz 19 des Förderkolbens 8 in die Arbeits- und Dosierkammer 17 bis zu deren vollständiger Füllung. Es ist erkennbar, daß durch die Stellung des Steuerschlitzes 19 in bezug zur Steuerkante des Pumpengehäuses die öffnende Verbindung zwischen der Arbeits- und Dosierkammer 17 und dem Schmierstoff-Ansaugraum 20 hergestellt ist.

Der Steuerkolben 4 dagegen befindet sich in der Schließstellung, so daß kein Schmierstoff durch den Auslaß austreten kann. Der Steuerschlitz 18 liegt vollständig innerhalb des Pumpengehäuses und weist keine Überschneidung zur in der Zeichnung linken Steuerkante auf. Die Wirkrichtung der nicht dargestellten Federn der beiden Kolben ist durch die Pfeile links und rechts verdeutlicht.

Die in Figur 4 der Zeichnung mittlere Darstellung zeigt den Vorgang der Kompression nach Einschalten des Magnetantriebs. Dieser bewirkt eine Bewegung des Stifts 23 und damit des Förderkolbens 8 gemäß Pfeil nach links, wobei der in der Arbeits- und Dosierkammer 17 befindliche Schmierstoff komprimiert wird. Die Stellung "Steuerschlitz 19 zur Steuerkante des Gehäuses" ist in Schließstellung.

Nach der Kompression des Schmierstoffs in der Arbeits- und Dosierkammer 17 wird die Antriebskraft auf den Steuerkolben 4 übertragen und dieser bewegt sich gegen die Wirkung seiner Feder 2 in der Zeichnung nach links zum Erreichen der Öffnungs- und Abgabestellung. Dabei kommt die Stirnseite des Förderkolbens 8 an dem Steuerkolben 4 zur Anlage und bewegt sich mit diesem bis über die linke Steuerkante hinaus. Ein besonderer Vorteil dieser Ausbildung ist die damit ermöglichte Entlüftung der Arbeits- und Dosierkammer 17 von Lufteinschlüssen.

Die untere Darstellung in Figur 4 der Zeichnung zeigt den Moment, in dem der Steuerschlitz 18 des Steuerkolbens 4 die zugehörige Steuerkante des Pumpengehäuses in der Kolbenbewegung erreicht und somit die Arbeits- und Dosierkammer 17 zum Auslaß hin öffnet. Die Öffnungsstellung soll durch die beiden schräggerichteten Pfeile verdeutlicht sein.

Der Schmierstoff tritt nun dosiert durch den Auslaß aus und der Magnetantrieb wird stromlos geschaltet. Die Feder 7 im Volumengehäuse schiebt anschließend den Förderkolben 8 mit dem Stift 23 wieder in die Ausgangsstellung zurück. Gleichzeitig bewegt die Feder 2 den Steuerkolben 4 wieder in die Schließstellung bis zum Anschlag des Sicherungsrings 3 an der zugehörigen Steuerkante des Pumpengehäuses 5.

Der Steuerschlitz 19 des Förderkolbens 8 steht nun wieder mit dem Einlaß 16 in Verbindung so daß bei dünnen Medien drucklos und bei steifen Schmierstoffen unter Druck eine erneute Befüllung der Arbeits- und Dosierkammer 17 erfolgt.

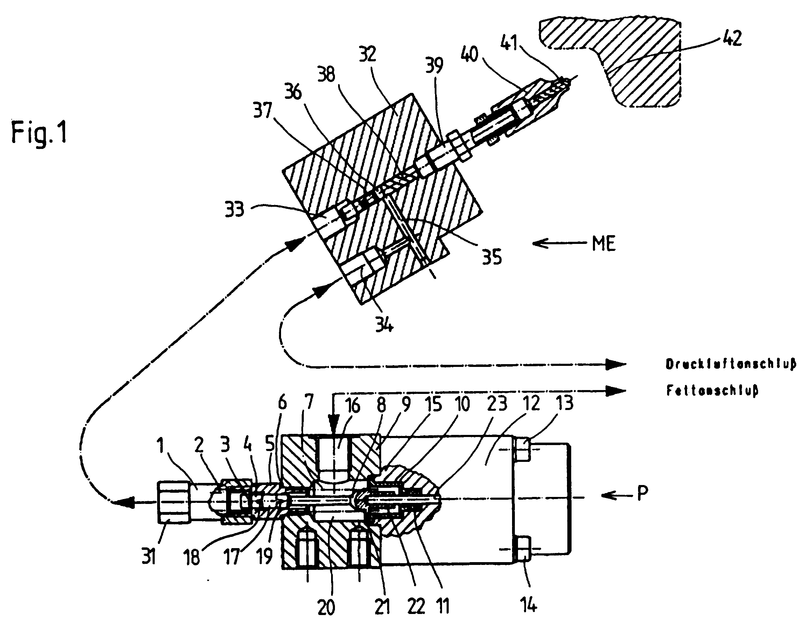

An den Auslaß 31 der Magnetkolbenpumpe P sowie an eine Druckluftquelle ist gemäß Figur 1 der Zeichnung ein Mischelement ME angeschlossen. Hierzu sind im Mischelementkörper 32 parallel zueinander eine Fettanschlußbohrung 33 und eine Druckluftanschlußbohrung 34 ausgebildet, die über eine Verbindungsbohrung 35 in eine Mischkammer 36 zusammengeführt sind. Vor der Mischkammer 36 ist in der Druckluftanschlußbohrung 34 ein Rückschlagventil 37 eingesetzt.

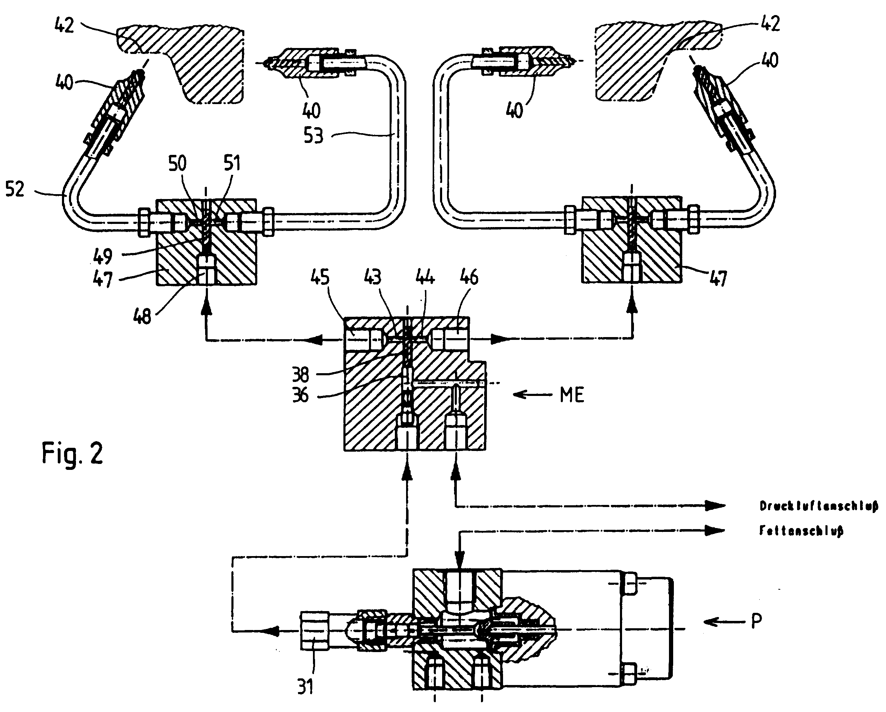

Die Druckluftanschlußbohrung 34 ist zur Ausbildung der Mischkammer 36 kammerartig gestaltet und mit einem drallerzeugenden Einsatz 38, nämlich dem Drallstück eines Bohrers, versehen. Dieser teilt das in der Mischkammer 36 erzeugte Schmierstoff-Luft-Gemisch in zwei homogene Teilströme, welche Wirkung in den Ausführungsformen gemäß Figur 2 und Figur 3 der Zeichnung genutzt wird. Bei der Ausführungsform der Figur 1 wird allein der Homogenisierungseffekt des Dralleinsatzes gebraucht, da das unter Drall gesetzte Schmierstoff-Luft-Gemisch über einen einzigen Auslaß 39 des Mischelementes 36 zu einer Düse 40 geführt ist, in deren Düsenbohrung ein drallerzeugender Einsatz 41, nämlich das Drallstück eines Bohrers fest eingedrückt ist. Die Düse ist am Spurkranz 42 eines Schienenfahrzeuges zu dessen Schmierung angeordnet.

Die durch den Dralleinsatz über die Homogenisierung hinaus gegebene Möglichkeit der Aufteilung des Gemisches in zwei Teilströme wird bei der Ausführungsform der Erfindung gemäß Figur 2 der Zeichnung ausgenutzt. Das dort in der Anlage verwendete Mischelement unterscheidet sich von dem vorbeschriebenen Mischelement ME dadurch, daß die die Mischkammer 36 bildende Bohrung im Strömungsweg hinter dem Dralleinsatz 38 verschlossen ist und die beiden durch die Wendel gebildeten Spiralkanäle über je eine Querbohrung 43, 44 zu Auslässen 45, 46 für das Schmierstoff-Luft-Gemisch geführt sind. An jeden Auslaß 45 bzw. 46 ist über eine nicht dargestellte, durch Pfeile verdeutlichte Rohrleitung ein T-Stück 47 angeschlosssen, in dessen Zuführungsbohrung ein Dralleinsatz 49 eingesetzt ist, der unter Aufrechterhaltung der Homogenität des Schmierstoff-Luft-Gemisches eine erneute Aufteilung in zwei Teilströme bewirkt, die über Querbohrungen 50, 51 und Rohrleitungen 52, 53 zu Düsen 40 geführt sind, welche wiederum an den Spurkränzen 42 von Schienenfahrzeugen angeordnet sind.

Die in Figur 2 dargestellte Ausführungsform des Mischschmiersystems ermöglicht über das Mischelement und die beiden T-Stücke eine Aufteilung des Schmierstoff-Luft-Gemisches in vier Teilströme, die über die zugehörigen Düsen 40 vier Schmierstellen mit hoher Taktfolge und Kleinstmengen schmieren können, wobei ein außerordentlich homogenes Gemisch bleibend erzeugt wird und mit einem Sprühbild extremer Randschärfe abgegeben wird.

Die in Figur 3 der Zeichnung dargestellte Ausführungsform verwendet im Gegensatz zu den vorbeschriebenen zwei Magnetkolbenpumpen P₁ und P₂, dessen Auslässe 1.1 und 1.2 an Mischelemente ME₁ und ME₂ angeschlossen sind, deren Auslässe wiederum über Kreuz zu Düsen an Spurkränzen von Schienenfahrzeugen für Rillenschienen (Straßenbahnen) geführt sind.

### Bezugszeichenliste

- 1: Rohranschluß
- 1.1: Auslaß
- 1.2: Auslaß
- 2: Feder
- 3: Sicherungsring
- 4: Steuerkolben
- 5: Pumpengehäuse
- 6: Ringdichtung
- 7: Feder
- 8: Förderkolben
- 9: Volumengehäuse
- 10: Stützringeinrichtung
- 11: Dichtung
- 12: Magnetantrieb
- 13: Schraube
- 14: Schraube'
- 15: O-Ringdichtung
- 16: Einlaß
- 17: Dosierkammer
- 18: Steuerschlitz
- 19: Querschlitz
- 20: Schmierstoffansaugraum
- 21: Halteflansch
- 22: Erstreckung
- 23: Verbindungsstift

- 31: Auslaß
- 32: Mischelementkörper
- 33: Fettanschlußbohrung
- 34: Druckluftanschlußbohrung
- 35: Verbindungsbohrung
- 36: Mischkammer
- 37: Rückschlagventil
- 38: drallerzeugender Einsatz
- 39: Auslaß
- 40: Düse
- 41: Dralleinsatz
- 42: Spurkranz
- 43: Querbohrung
- 44: Querbohrung
- 45: Auslaß
- 46: Auslaß
- 47: T-Stück
- 48: Zuführungsbohrung (Gemischkammer)
- 49: Dralleinsatz
- 50: Querbohrung
- 51: Querbohrung
- 52: Rohrleitung
- 53: Rohrleitung

- P: Magnetkolbenpumpe
- P₁: Magnetkolbenpumpe
- P₂: Magnetkolbenpumpe
- ME: Mischelement
- ME₁: Mischelement
- ME₂: Mischelement

## Patentansprüche

1. Mischschmiersystem für eine Öl-, bzw. Fließfett-Luftschmierung, mit einer Schmierstoffpumpe (P, P₁, P₂), einer Druckluftzufuhr (34) und einem Mischelement (ME, ME₁, ME₂) zum Mischen von Schmierstoff und Druckluft, gekennzeichnet durch die Kombination folgender Merkmale:
a. Dosierpumpe (P, P₁, P₂)für Schmierstoffe mit einem eine Arbeits- und Dosierkammer (17) bildenden Zylinderraum im Pumpengehäuse (5), in den von der Auslaßseite her ein federbelasteter Steuerkolben (4) und von der Einlaßseite her ein in gleicher Wirkrichtung federbelasteter Förderkolben (8) hineinragen, welcher einen Schmierstoffansaugraum (20) durchdringt, der in koaxialer Anordnung an die Arbeits- und Dosierkammer (17) angeschlossen ist, und welcher mit einem Elektromagnetantrieb (12) verbunden ist,
b. Mischelement (ME, ME₁, ME₂) mit einem Druckluft- (34) und einem Schmierstoffanschluß (33) an eine Mischkammer (36) mit Auslaßkanal (39), wobei in dem Auslaßkanal (39) ein drallerzeugender Einsatz (38), vorzugsweise das Drallstück eines Bohrers vorzugsweise zur Erzeugung von zwei Schmierstoff-Luftgemisch-Teilströmen angeordnet ist, denen jeweils ein Auslaß (45, 46) zugeordnet ist, und
c. eine an jeden Auslaß des Mischelementes (ME, ME₁, ME₂) angeschlossene Sprühdüse (40), deren Düsenbohrung einen drallerzeugenden Einsatz (41), vorzugsweise das Drallstück eines Bohrers, aufweist.

2. Mischschmiersystem nach Anspruch 1, dadurch gekennzeichnet, daß zwischen dem Mischelement (ME) und der Düse (40) ein T-Stück (47) angeordnet ist, bei welchem im Gemischkanal (48) ein drallerzeugender Einsatz (49), vorzugsweise das Drallstück eines Bohrers, angeordnet ist, an den zwei Auslaßbohrungen (50, 51) angeschlossen sind.

3. Mischschmiersystem nach Anspruch 1 oder 2, dadurch gekennzeichnet, daß der drallerzeugende Einsatz (38 bzw. 49) mit einer Strömungslänge für das Gemisch mit einer vollen Umdrehung entsprechend einem Drall von mindestens 360° vor der Abführung in die beiden Auslässe (45, 46 bzw. 50, 51) vorgesehen ist.

4. Mischschmiersystem nach einem der Ansprüche 1 bis 3, dadurch gekennzeichnet, daß im Mischelement (ME) vor der Mischkammer (36) in der Schmierstoffzuführung ein Rückschlagventil (37) angeordnet ist.

5. Mischschmiersystem nach einem der Ansprüche 1 bis 4, dadurch gekennzeichnet, daß im Mischelement (ME) die Schmierstoffzuleitung als kammerartige Bohrung (Mischkammer 36) fortgesetzt ist, in die über eine querverlaufende Verbindungsbohrung (35) eine Druckluftzuführung durchgeführt ist, wobei der Druckluftanschluß parallel zum Schmierstoffanschluß angeordnet ist und über beidseitige Querbohrungen (43, 44) im Bereich des drallerzeugenden Einsatzes (38) zwei Auslässe (45, 46) für die beiden Gemisch-Teilströme gebildet sind.

6. Verwendung eines Mischschmiersystems gemäß einem der Ansprüche 1 bis 5 als Spurkranzschmieranlage für Schienenfahrzeuge, bestehend aus einer Magnetkolbenpumpe (P) mit einem Mischelement (ME) und einer Dralldüse (40).

7. Verwendung nach Anspruch 6, gekennzeichnet durch ein Mischelement (ME) mit zwei Auslässen (45, 46), ein jeweils daran angeschlossenes T-Stück (47) und vier Dralldüsen (40).

8. Verwendung gemäß Anspruch 6 und 7, gekennzeichnet durch zwei parallel arbeitende Magnetkolbenpumpen (P₁, P₂) mit daran angeschlossenen Mischelementen (ME₁, ME₂), von denen zwei Ausgänge zum jeweils anderen Spurkranz geführt sind.

## Claims

1. Mixer lubricating system for oil or liquid fat-air lubrication, with a lubricant pump (P, P₁, P₂), a compressed air supply (34) and a mixing element (ME,ME₁, ME₂) for mixing lubricant and compressed air,
characterised by the combination of the following features:
a. Metering pump (P, P₁, P₂) for lubricants with a cylinder chamber in the pump housing (5) forming a working and metering chamber (17) into which projects from the outlet side a spring-loaded control piston (4) and from the inlet side a conveying piston (8) spring-loaded in the same direction, which cylinder chamber penetrates a lubricant suction chamber (10) which in coaxial arrangement is connected to the metering and working chamber (17) and which is associated with an electromagnetic drive (12)
b. Mixing element (ME, ME₁, ME2) with a compressed air connection (34) and a lubricant connection (33) to a mixing chamber (36) with outlet channel (39), whereby in the outlet channel (39) there is arranged a twist generating insert (38), preferably the drill bit of a drill, preferably for producing two lubricant-air mixture partial streams, which is in each case provided with an outlet (45, 46), and
c. a spray nozzle (40), connected to each outlet of the mixer element (ME, ME₁, ME₂), whose nozzle bore has a twist generating insert (41), preferably the drill bit of a drill.

2. Mixer lubricating system according to claim 1, characterised in that between the mixing element (ME) and the nozzle (40) there is arranged a T-piece (47) which has in the mixture channel (48) a twist generating insert (49), preferably the drill bit of a drill to which are connected two outlet bores (50, 51).

3. Mixer lubricating system according to claim 1 or 2, characterised in that the twist generating insert (38 or 49) with one flow length for the mixture prior to the delivery to the two outlets (45, 46 or 50, 51) is provided with a full revolution corresponding to a twist of at least 360°.

4. Mixer lubricating system according to one of the claims 1 to 3, characterised in that a backpressure valve (37) is arranged in the lubricant supply duct of the mixing element (ME) prior to the mixing chamber (36).

5. Mixer lubricating system according to one of the claims 1 to 4, characterised in that in the mixing element (ME) the lubricant supply line is continued as a chamber-like drilling (mixing chamber 36) in which via a transverse running connecting bore (35) is carried out a compressed air supply, wherein the compressed air connection is arranged parallel to the lubricant connection and through transverse drillings (43, 44) on both sides in the region of the twist producing insert (38) two outlets (45, 46) are formed for the two mixture partial streams.

6. Use of a mixer lubricating system according to one of the claims 1 to 5 as wheel flange lubricating system for rail vehicles, comprising of a magnetic piston pump (P) with a mixing element (ME) and a twist nozzle (40).

7. Use accordihg to claim 6, characterised by a mixing element (ME) with two outlets (45, 46), a T-piece (47) connected thereto respectively and four twist nozzles (40).

8. Use according to claim 6 and 7, characterised by two parallel operating magnetic piston pumps (P1, P2) with mixing elements (ME₁, ME₂) connected thereto, of which two outlets are taken to the other wheel flange respectively.

## Revendications

1. Système de graissage par mélange pour un graissage à l'huile ou à la graisse fluidifiée et à l'air, comportant une pompe à lubrifiant (P, P₁, P₂), une alimentation en air comprimé (34) et un élément mélangeur (ME, ME₁, ME₂) pour mélanger un lubrifiant et de l'air comprimé, caractérisé par la combinaison des particularités suivantes :
a) une pompe de dosage (P, P₁, P₂) pour lubrifiants comportant, dans le carter de pompe (5), un espace cylindrique constituant une chambre de travail et de dosage (17), dans laquelle pénètrent, à partir du côté sortie, un piston pilote (4) commandé par ressort et, à partir du côté admission, un piston d'alimentation (8) commandé par ressort dans le même sens de circulation et qui traverse un espace d'aspiration de lubrifiant (20) , est raccordé de manière coaxiale à la chambre de travail et de dosage (17) et est relié à une commande par électro-aimant (12) ;
b) un élément mélangeur (ME, ME₁, ME₂) avec une alimentation en air comprimé (34) et une alimentation en lubrifiant (33) au niveau d'une chambre de mélange (36) avec passage de sortie (39), un insert générateur de tourbillon et de dérivation (38), de préférence la pièce à rainure hélicoïdale d'un foret, étant disposé dans le passage de sortie (39), de préférence pour produire deux flux partiels du mélange air-lubrifiant, chacun étant associé à un orifice de sortie (45, 46) ; et
c) une buse de pulvérisation (40), raccordée à chaque orifice de sortie de l'élément mélangeur (ME, ME₁, ME₂) et dont l'alésage comporte un insert générateur de tourbillon et de dérivation (41), de préférence la pièce à rainure hélicoïdale d'un foret.

2. Système de graissage par mélange selon la revendication 1, caractérisé en ce qu'une pièce en T (47) est disposée entre l'élément mélangeur (ME) et la buse (40), un insert générateur de tourbillon et de dérivation (49), de préférence la pièce à rainure hélicoïdale d'un foret, étant placé dans son canal de mélange (48) et deux passages de sortie (50, 51) étant raccordés à l'insert.

3. Système de graissage par mélange selon la revendication 1 ou 2, caractérisé en ce que l'insert générateur de tourbillon et de dérivation (38 ou 49) est prévu avec une longueur d'écoulement pour le mélange, avec une rotation complète, correspondant à une giration d'au moins 360°, avant l'évacuation vers les deux orifices de sortie (45, 46, ou 50, 51).

4. Système de graissage par mélange selon l'une des revendications 1 à 3, caractérisé en ce qu'un clapet de non-retour (37) est disposé dans le passage d'amenée de lubrifiant, dans l'élément mélangeur (ME) avant la chambre de mélange (36).

5. Système de graissage par mélange selon l'une des revendications 1 à 4, caractérisé en ce que, dans l'élément mélangeur (ME), le conduit d'alimentation en lubrifiant est prolongé en tant qu'alésage en forme de chambre (chambre de mélange 36), dans lequel est effectuée l'amenée d'air comprimé par l'intermédiaire d'un alésage transversal de raccordement (35), l'alimentation en air comprimé étant alors disposée parallèlement à l'alimentation en lubrifiant et deux orifices de sortie (45, 46) pour les deux flux partiels du mélange étant formés par l'intermédiaire d'alésages transversaux (43, 44) des deux côtés dans la zone de l'insert générateur de tourbillon et de dérivation (38).

6. Utilisation d'un système de graissage par mélange selon l'une des revendications 1 à 5, en tant qu'installation de graissage de boudins pour véhicules sur rails, composée d'une pompe à piston à électro-aimant (P), d'un élément mélangeur (ME) et une buse à tourbillon (40).

7. Utilisation selon la revendication 6, caractérisée par un élément mélangeur (ME) à deux orifices de sortie (45, 46), une pièce en T (47) raccordée à chacun d'eux, et quatre buses à tourbillon (40).

8. Utilisation selon les revendications 6 et 7, caractérisée par deux pompes à piston à électro-aimant (P₁, P₂) fonctionnant en parallèle avec les éléments mélangeurs (ME₁, ME₂) raccordés, dont deux orifices de sortie sont dirigés chaque fois vers l'autre boudin.
